# EUROPEAN PATENT APPLICATION

(11) **EP 1 486 668 A1**
(43) Date of publication of application: **15.12.2004**
(21) Application number: 03425384.9
(22) Date of filing: 13.06.2003
(51) Int. Cl.: F03B 1/00, F03B 3/08, F03B 7/00, F04D 29/24, F04D 1/12

(54) **Impulse turbine, particularly of the reversible type**

(71) Applicant: Barozzi, Pietro, 10048 Vinovo (Torino) (IT)
(72) Inventor: Barozzi, Pietro, 10048 Vinovo (Torino) (IT)
(74) Representative: Cian, Paolo

(57) **Abstract**

An impulse turbine, particularly of the reversible type, comprises at least a runner (10) fast on a shaft in order to be rotatable about an axis of rotation. Each runner (10) is provided with at least a hollow working member (12) adapted to receive a fluid fed according to a direction substantially transverse with respect to said axis of rotation, from an inlet portion (12a) to a discharge portion (12b) of the hollow working member (12), so that thrust forces are generated whose resultant (F) tends to drive the runner (10) into rotation as a result of the passage of the fluid in the hollow working member (12). The distance (r) between the straight line of action of the resultant (F) of the thrust forces (F) on each hollow working member (12) and the axis of rotation of the runner (10) is smaller than the distance (R) between the inlet portion (12a) of each hollow working member (12) and the axis of rotation of the runner (10).

## Description

The present invention refers to fluid rotary machines, for example of hydraulic, steam or gas type, which can be used in particular as turbines and as pumps.

More specifically, the invention refers to an impulse turbine, that is in which the pressure potential energy of the fluid is transformed entirely into kinetic energy solely in the distributor and not in the runner.

More in particular, the invention relates to an impulse turbine having the features recited in the preamble of annexed claim 1.

A typical impulse hydraulic turbine is the Pelton wheel turbine. Machines of such a kind turn out to be advantageous with respect to other turbines because they are simple constructively, reliable in operation, with a high efficiency and easy to maintain. However, usually they are used with great heights of fall of the water, being not recommended or not very efficient with small and medium heights of fall. The small or medium heights, which are the most common in nature and therefore those which are more promising in view of the exploitation by hydroelectric power plants, can be used in practice by using reaction hydraulic turbines, such as Francis or Kaplan turbines, requiring much more expensive plants with a more complex maintenance, at least in order to avoid the risk that cavitation phenomena may be triggered on the blades of the respective runners.

The main problem affecting Pelton wheel turbines consists in the fact that their constructive geometry is not very flexible and is poorly adapted to allow the change of the speed of rotation of their runners depending on the necessity, when the speed of the fluid fed to each runner is fixed.

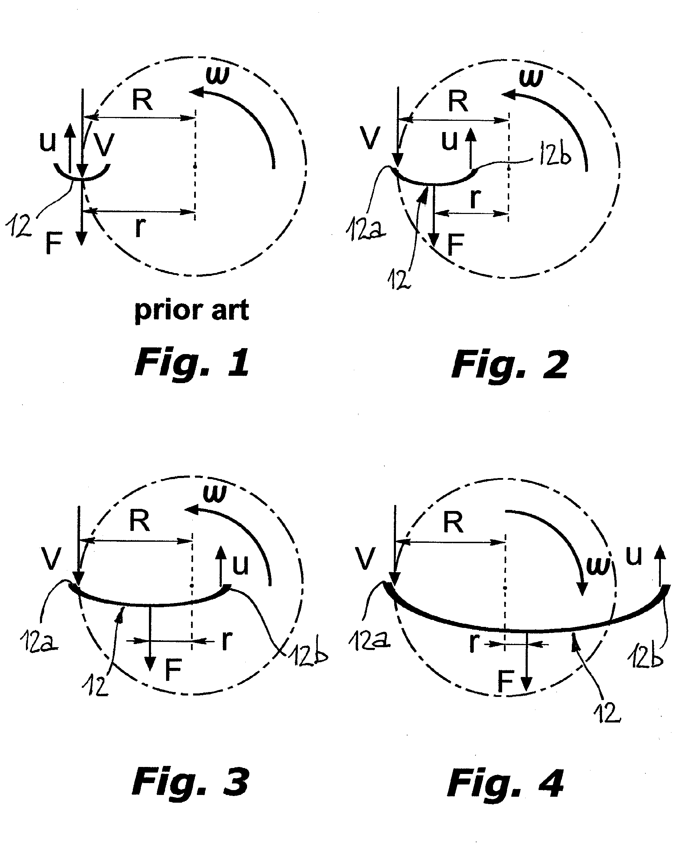

The geometry and the operation of a runner of a Pelton wheel turbine are represented in principle in figure 1 of the drawings.

In this figure, a blade 12 of the runner 10 is hit by a fluid spout directed tangentially with respect to the runner 10 with a true speed V, whose straight line of action is at a distance R from the axis of rotation of the runner 10, that is from a plane which passes along the axis of rotation of the runner 10 and is parallel to the speed V (which is schematically indicated in this figure by a dotted line). After the fluid has discharged a part of its energy on the blade 12, it comes out from it with a speed u smaller than V. As a result of the thrust applied by the fluid, the blade 12 is subject to the action of forces whose resultant F, at least as a first approximation and overlooking the friction forces, can be considered acting at a point close to the centre of the blade 12, which substantially corresponds with the geometric centre of the same blade. The resultant F can be represented by a vector whose straight line of action is at a distance corresponding to the radius r from the centre of the runner 10, in this case being approximately r=R. The resultant F acts on the relative blade 12 so as to originate a moment with respect to the centre of the runner 10 and to cause it to rotate with an angular velocity ω having, in this figure, a counter-clockwise direction.

In the solution schematically illustrated in figure 1, when the working conditions are defined, in practice when the speed V of the fluid fed to the runner 10 is defined, to a change of the radius r corresponds a change of the angular velocity ω of the runner. More concretely, a reduction of the radius r implies an increase of the angular velocity ω.

The possibility to change the angular velocity ω of the runner is particularly interesting in the case of the hydraulic turbines, since it allows to adjust the speed of a machine to the demand of the current generator associated with the shaft of its runner, in other words it allows to adjust the speed of the machine to the demand of the electric network to which it is associated. In the practical case of a turbine on whose shaft a bipolar alternator is fast for the direct production of 50 Hz alternated electric power, the speed of rotation of the runner must be 3000 r.p.m.. Should it be possible to change the aforesaid radius r at will, an angular velocity ω corresponding to 3000 r.p.m. could be obtained in practice for any absolute speed V of the fluid fed to the runner.

In a turbine of the type considered above and schematized in figure 1, it is not possible to change the radius r at will owing to geometric and constructive reasons. In particular, it is not possible to reduce the radius r at will, since the reduction of the diameter of the runner beyond a determined limit would imply the drastic reduction of the number of the blades or the fact that adjacent blades may cover each other and, in both these cases, it would cause the reduction of the capacity of the machine to produce energy.

In order to overcome these drawbacks, the subject of the invention is an impulse turbine having the features stated in claim 1.

Thanks to this idea of solution, in an impulse turbine according to the invention the working members of each runner can be made so that the distance of the point at which the resultant of the forces acting on each of them with respect to the centre of the relevant runner acts, can be changed at will in order that the angular velocity of the runner can be changed at will for a given speed of the fluid fed to it. In this way, the performances of the machine can be adapted to the operational demands coming from the outside environment. The possibility to change at will the angular velocity of each runner for a prefixed speed of the fluid fed to the machine, allows in practice to made the machine almost independent from the height of fall of the fluid, when the machine has been used as an hydraulic turbine. As a consequence, the height of fall of the fluid can also be small or very small, so that a turbine according to the invention turns out to be very versatile. In particular, when the turbine is associated with an electric power generator, its speed of rotation can be exactly adjusted with the demand by the electric network in which the generator is inserted.

Moreover, a turbine according to the invention is marked by a simple and economic structure, which is adapted to make impulse turbines the working members of each runner of which do not work in conditions of low pressure, as instead happens in the reaction turbines, so that they do not run any risk of cavitation with the resulting erosion phenomena of the material which constitutes them.

A turbine according to the invention has also the remarkable advantage to allow a reversible operation, and to be therefore able to operate either as a turbine in order to generate electric power by means of a respective generator, or as a pump in order to move a fluid mass when the generator associated with the turbine is fed so as to work like an electric motor. The characteristic of the reversible operation of the turbine according to the invention makes it more adapted to be used to produce energy in a hydroelectric power and pumping plant.

Further characteristics and advantages of the invention will become more clearly evident from the following detailed description, made with reference the annexed drawings given purely by way of a non limiting example, in which:
- figure 1 is a principle view showing the operation of a runner of an impulse turbine according to the prior art,
- figures 2, 3 and 4 are views similar to figure 1, which respectively show the principle of operation of three different runners of a turbine according to the invention,
- figure 5 is a schematic perspective view of a first embodiment of a turbine according to the invention,
- figure 6 is a front elevational view of the turbine of figure 5, from arrow VI of such a figure,
- figure 7 is a top elevational view of the turbine of figures 5 and 6, partially sectioned at the shaft of the runner, from arrow VII of figure 6,
- figure 8 is a schematic perspective view of another embodiment of a turbine according to the invention,
- figure 9 is a side elevational view of the turbine of figure 8 partially sectioned at the shaft of the runner, from arrow IX of figure 8, and
- figure 10 is a bottom elevational view of the turbine of figures 8 and 9, from arrow X of figure 8.

With initial reference to figures 2 to 4, a turbine runner 10 has at least a hollow working member 12, having a generally arched shape, which extends transversely to its axis of rotation, for example according to a more or less inclined configuration with respect to this axis and to the plane of figures 2 to 4. Each working member 12 has an inlet portion 12a at which a fluid having an absolute speed V is fed according to a substantially transverse direction with respect to the axis of rotation of the runner 10. From a practical point of view, such a hollow working member can be made with a greater facility by means of a blade or a tubular duct. Each working member 12 of the runner 10 has its inlet portion directed tangentially with respect to the runner 10, towards the direction from which the fluid comes, and a discharge portion 12b from which the fluid comes out after having lapped a bottom surface of the member 12.

Although in the continuation of the description a specific reference to an impulse turbine of hydraulic will be made, namely using water as a working fluid, the invention can be applied also to an impulse turbine working with other liquids, vapours or gas, with few changes at the reach of the skilled person. Moreover, a turbine according to the invention, being of the reversible type, can also be used as a pump or a compressor.

In the operation of the machine as a turbine, the working fluid flows along the member 12 until it reaches the discharge portion 12b, from which it is discharged with a residual relative speed u which is smaller than the inlet speed V (preferably almost zero), approximately parallel but with a direction opposite to that of the speed V. The shape of the working members 12, and in particular their curvature, can be selected so as to obtain that the radius r, that is the distance of the straight line of action of the force F from the axis of rotation of the runner 10, is such as to obtain a desired speed of rotation ω for a prefixed speed V of the fluid.

As illustrated in particular in figures 3 and 4, the inlet and discharge portions 12a and 12b of each member 12 of the runner 10 are arranged at opposite sides with respect to an imaginary plane of reference (schematized in these figures by a dotted line) which passes along the axis of rotation of the runner 10 and is arranged perpendicularly to a rectilinear segment joining the inlet and the discharge portions 12a and 12b of the member 12.

When the point at which the resultant F acts is located between the aforesaid plane of reference and the inlet portion 12a of the member 12 (figure 3), the speed of rotation ω of the runner 10 will have a counter-clockwise direction with respect to figure 3, so that the runner 10 will tend to rotate in such way that the inlet portion 12a of each of its members 12 will move in agreement with the fluid fed to the inlet portion of the same member 12.

When, instead, the point at which the resultant F acts is located between the plane of reference and the discharge portion 12b of the member 12 (figure 4), the speed of rotation ω of the runner 10 will have a clockwise direction with respect to figure 4, so that the runner 10 will tend to rotate in such a way that each inlet portion 12a of each working members 12 of it will move towards it. In this second event, the fluid will be fed to each member 12 with a speed corresponding to the sum of the absolute speed V of the fluid and the peripheral speed of rotation of the input portion 12a of the member 12 with respect to a stationary zone of the machine, which will allow an increase of the relative flowing speed of the fluid along each member 12, which causes a positive effect on the speed of rotation of the runner 10.

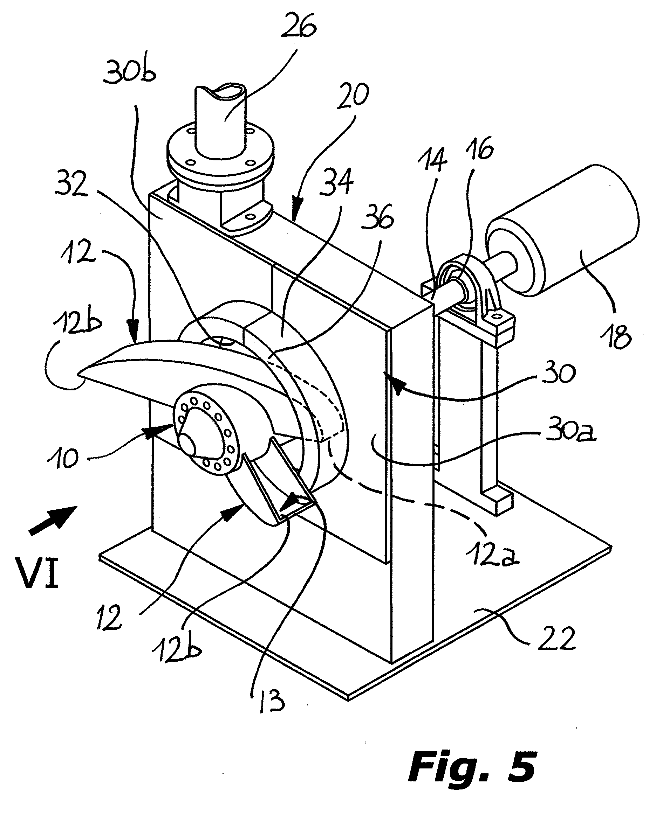

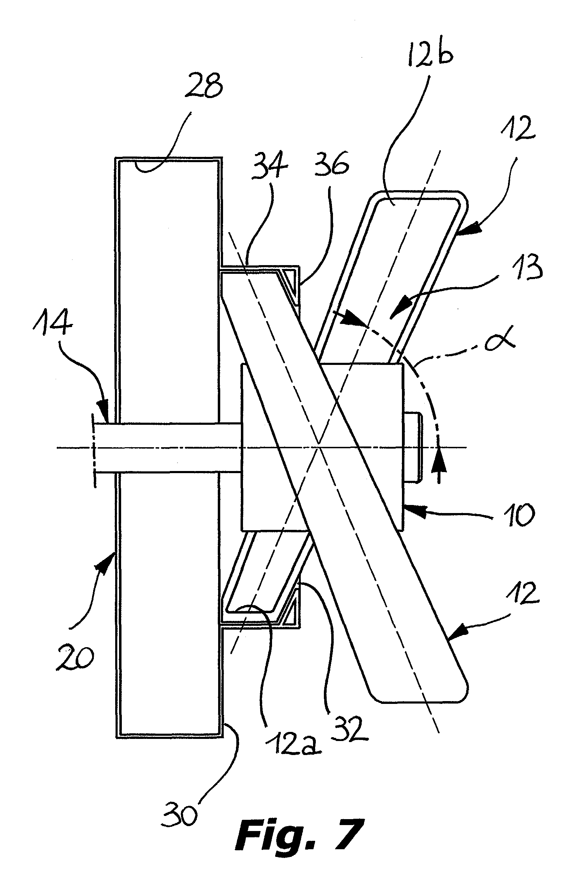

In figures 5 to 7 a first embodiment of a turbine according to the invention is schematically illustrated, which has a runner 10 whose working members 12 are constituted by blades 12 having an open concave section, which may have indifferently a geometry similar to that illustrated in one of the figures 2 to 4, as a function of the performances that one desires to obtain from the machine.

The runner 10 is fast on a shaft 14 arranged horizontally, which defines the axis of rotation of the runner 10. The shaft 14 is typically supported in rotation by at least a rolling bearing 16 and is connected to the rotor of an electric current generator 18, such as an alternator.

The runner 10 is associated with a distributor unit 20 supported by a base 22 and crossed by the shaft 14. Inside the group 20, a vertical feeding duct 24 coaxial with a fluid delivery pipe 26 is arranged, the duct 24 being tangentially coupled with a spiral-shaped circulation chamber 28 having, at a sidewall 30 of it, a circular outflow opening 32, coaxial with the shaft 14. The opening 32 is encircled by a cylindrical collar 34, preferably provided with a bent out edge 36 at its outside end, within which the inlet portions 12a of the blades 12 are arranged, while the discharge portions 12b of each blade are arranged outside the collar 34. In order to make the assembly easier, the wall 30 is preferably divided into more portions, such as two semi-portions 30a and 30b, each of which can be disassembled in an independent way.

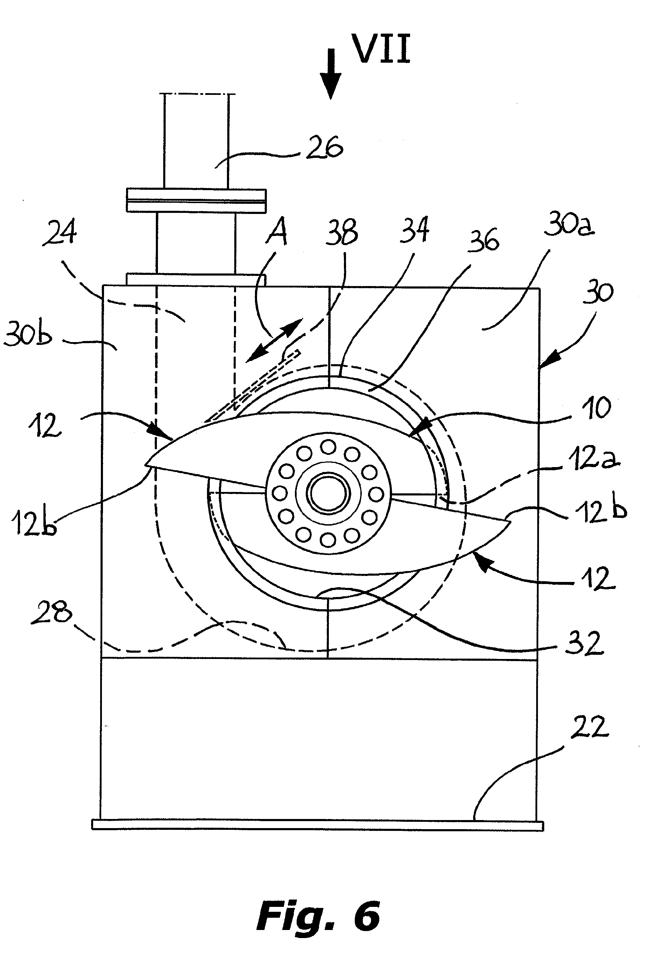

Conveniently, the distributor unit 20 comprises means for adjusting the flow rate of the fluid fed to the circulation chamber 28, which include, for example, a slab 38 slidably mounted along a direction indicated by double arrow A of figure 6, adapted to take a series of positions in which it interferes with the flow of the fluid coming from the duct 24, in different ways. As an alternative to the slidable slab 38, a tab swingable about an axis of rotation parallel to the shaft 14, or a throttle arranged in the duct 24, may be provided. To the slab 38 or any other device known per se for adjusting the flow rate, a device for opening outside the duct 24 (not illustrated) is conveniently associated, so as to allow, if necessary, the fluid coming from the delivery pipe 26 to flow outside the distributor 20.

The movement of the slab 38 or any other member for adjusting the fluid flow rate admitted inside the unit 20, can be controlled by any actuating device known per se (not illustrated) the driving of which can be automatically controlled by means of sensors of the speed of rotation of the runner 10 and/or of the flow rate of the fluid passing through the delivery pipe 26.

Preferably, the discharge portion 12b of each blade 12 of the runner 10 is wider than the relative inlet portion 12a, and the arched bottom surface 13 thereof, which may be shaped as an arc of a circle, elliptical or spiral portion, extends by an angle a little smaller than 180°, for example about 170°.

In order to allow the correct positioning of the inlet portions 12a of the blades 12 inside the collar 34 of the distributor 20, and to avoid that the portions 12a of several blades 12 may cover each other, the blades 12 are arranged preferably with the centre line of their own bottom surface 13 inclined with an angle α with respect to the axis of rotation of the runner 10, which angle, at least for a runner 10 provided with two facing blades 12, such as that illustrated in figures 5 to 7, may correspond to about 60°. Since a runner 10 of a turbine according to the invention can be provided with a single blade or with more than two blades, as a function of the performances required to the machine and of its working conditions, the angle α may have several value also substantially different from that indicated above, in particular in the case of a number of blades different from two.

When the machine operates as a turbine, the fluid coming from the pipe 26 passes along the tangential duct 24 until it reaches the circulation chamber 28 where it will be induced to rotate as a whirl according to a counter-clockwise direction, with reference to figures 5 and 6. The fluid reaching the outflow opening 32 and the zone delimited by the collar 34, will be subjected to a whirling movement but it will also have an axial component, usually small, in order to promote the uniform outflow of the fluid from the distributor 20. Therefore, the fluid reaching the opening 32 will be fed to the inlet portions of the blades 12 according to a direction which is mainly tangential with respect to the axis of rotation of the runner 10, so as to run along each blade 12 and to generate a thrust action applied approximately at the centre of each blade 12, in order to cause the runner 10 to rotate. After running along a blade 12, the fluid is discharged outside the machine through the respective discharge portion 12b.

As previously stated, an impulse turbine according to the invention can also be used as a driven machine by applying a torque to the shaft 14 by an electric motor which may be the same generator 18 fed with an electric current at its poles. In this working condition, the runner 10 is driven into rotation and the portions 12b of the ducts 12 will have to be submerged by the working fluid, at least for a portion of their circular motion about the axis of rotation of the runner 10, in such way that such a fluid can be moved until the portions 12a of each blade 12, and from these to the circulation chamber 28 and then to the pipe 26.

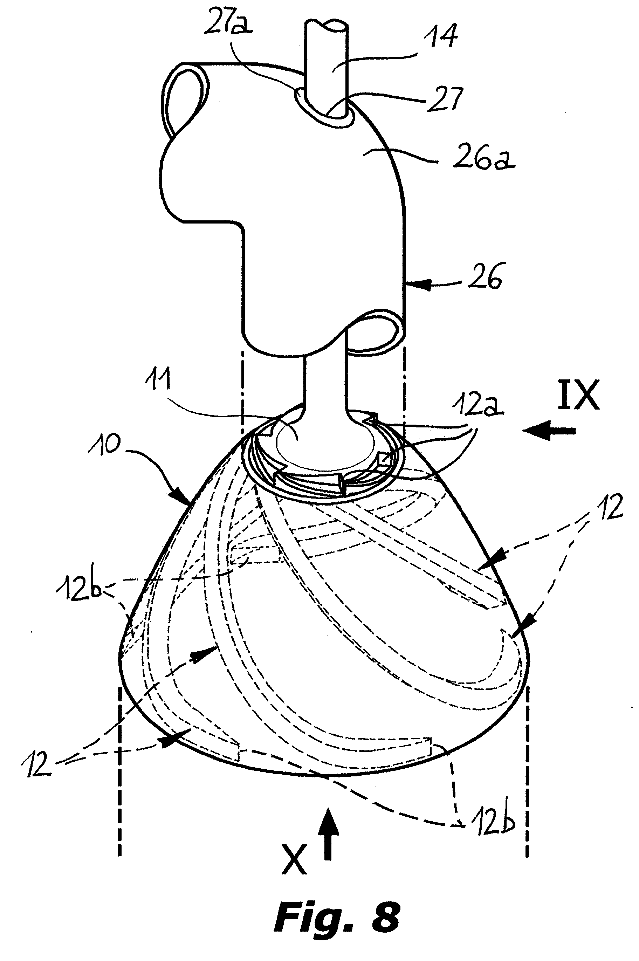

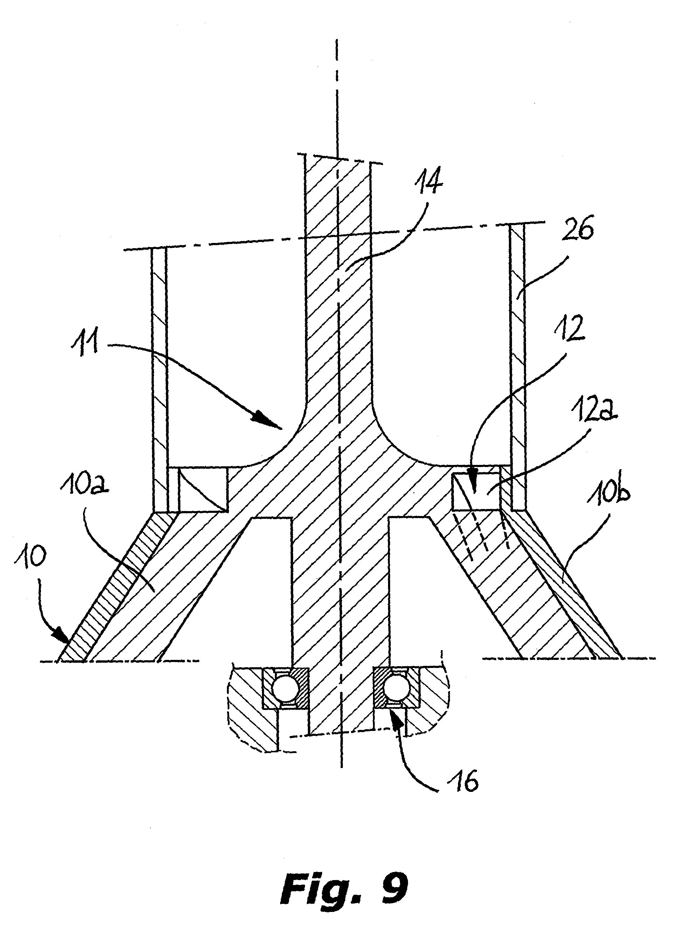

Figures 8 to 10, in which the same numeral references of figures 5 to 7 have been used for indicating parts equal or similar to those of the embodiment previously described, illustrate schematically another embodiment of an impulse turbine according to the invention.

The runner 10 of this machine is bell-shaped and is provided with a series of working members, for example six, each of which is constituted by a tubular duct 12 formed in the thickness of the body of the runner 10. Each duct 12 is helically wound with respect to the axis of rotation of the runner 10.

A shaft 14, which is supported vertically in rotation by at least a rolling bearing 16, such as a thrust bearing, is fixed to the runner 10.

A delivery pipe 26 is arranged upstream the runner 10 to feed the working fluid to the inlet portions 12a of the tubular ducts 12. The pipe 26 is substantially parallel to the shaft 24 at its zone close to the runner 10, while in a zone more distant from the runner 10 it has a bent or elbow portion 26a. A through opening 27 is formed in the portion 26, to which seal means 27a are associated through which the shaft 14 extends outside the pipe 26 in order to be connected with the rotor of an electric current generator, typically an alternator (not illustrated). Conveniently, downstream the runner 10 a pipe with a large diameter is arranged for collecting the fluid, which is schematically indicated by a pair of parallel dotted lines.

Likewise to the previous embodiment, the machine according to the present embodiment is also conveniently provided with means for adjusting the flow rate of the fluid fed to the runner 10. These means, which are not illustrated in the figures, are arranged in the pipe 26 upstream the elbow portion 26a and include, for example, a throttle swingably mounted about an axis transverse to the axis of the pipe 26, or a spindle or "Larner-Johnson" type valve. Likewise to the previous embodiment, upstream such means for adjusting the flow rate is arranged a device for opening outwards the pipe 26 (also not illustrated), which is able to allow to discharge the fluid outside the pipe 26 in the case of a stop of the plant.

Preferably, the body of the runner 10 is formed by two bell-shaped half-shells 10a and 10b coupled with each other by means of any connection means known per se. In particular, the first half-shell 10a is fixed to the shaft 14 and has on its outside surface a series of grooves, for example having a square cross section, each of which defines the main part of the side surface of a respective tubular duct 12. The second half-shell 10b constitutes a kind of cover which can be superimposed to the half-shell 10a in order to close the side surface of the various tubular ducts 12.

Also in this case, the geometry of the tubular ducts 12 can be either of the type illustrated in figure 3 or of the type illustrated in figure 4.

The shaft 14, at its portion more adjacent to the inlet portions 12a of tubular ducts 12, has a flaring or frustum of hyperboloid shaped portion 11, whose curved flanks allow to better direct the flow of the fluid towards the inlet portions 12a.

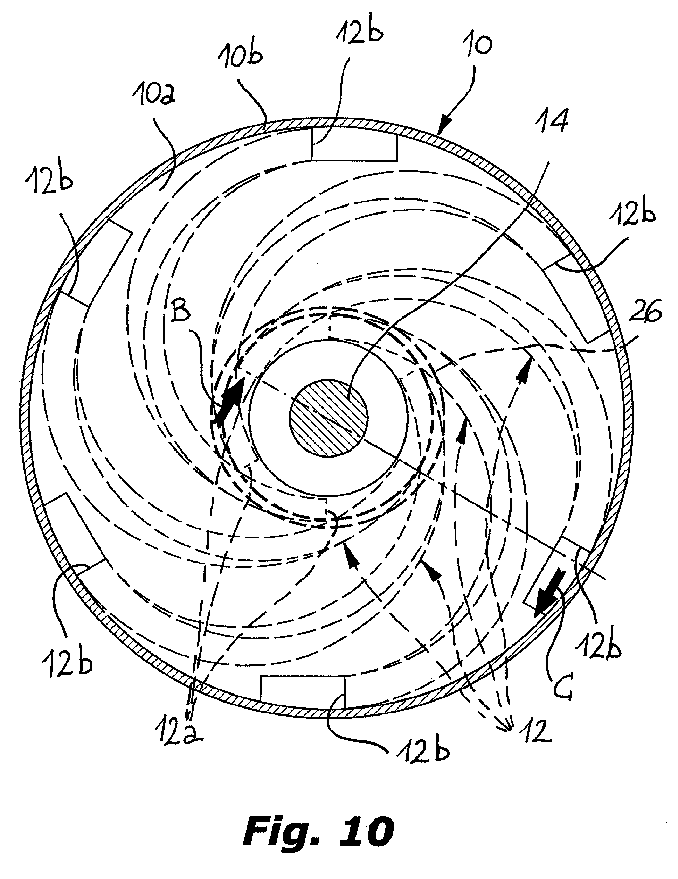

Also in this case, the discharge portion 12b of each tubular duct 12 preferably has a section wider than the relative inlet portion 12a, and each tubular duct 12 extends by an angle which is a little smaller than 180°, for example about 170°, as it is more clearly shown in figure 10.

When the machine operates as a turbine, the fluid fed through the delivery pipe 26, which in this case performs the function of an injector, reaches the fitting zone 11 of the shaft 14 at which it takes a substantially swirling movement in a plane perpendicular to the axis of the shaft 14, in order that it can be fed in a direction perpendicular to the mouth sections of the inlet portions 12a of the tubular ducts 12, as indicated by arrow B of figure 10, and in an almost tangential direction with respect to the shaft 14. After the fluid has passed through each duct 12, it is discharged from each duct 12 through its discharge portion 12b in the direction indicated by arrow C of figure 10. As a result of the passage of the fluid inside of the various ducts 12, the runner 10 is driven into rotation so as to drive the shaft 14 and the equipments fast on it.

If a torque is applied to the shaft 14 to drive it into rotation, its rotation will be transmitted to the runner 10 to allow the operation of the machine as a pump. In this case, the portion 12b of the ducts 12 should be submerged by the fluid in order to allow to draw it and take it to the portion 12a of each duct 12, and from here to the pipe 26.

It can be noticed that from the constructive point of view the machine of the present embodiment is simpler than the one of the previous embodiment, mainly because the spiral-shaped circulation chamber of the distributor, with the relative outflow opening, is absent. This arrangement makes also the operation of the machine more practical when it is used as a pump, since in this case the fluid drawn by the runner 10 is sent directly to the pipe 26.

## Claims

1. Impulse turbine, particularly of the reversible type, comprising at least a runner (10) fast on a shaft (14) so as to be rotatable about an axis of rotation, each runner (10) being provided with at least a hollow working member (12) adapted to receive a fluid fed according to a direction substantially transverse to said axis of rotation, from an inlet portion (12a) of the hollow working member (12) to a discharge portion (12b) thereof, so that as a result of the passage of the fluid in the hollow working member (12) thrust forces are generated whose resultant (F) tends to drive said runner (10) into rotation,
**characterized in that** the distance (r) between the straight line of action of the resultant (F) of the thrust forces (F) on each hollow working member (12) and the axis of rotation of the runner (10), is smaller than the distance (R) between the inlet portion (12a) of each hollow working member (12) and the axis of rotation of the runner (10).

2. Impulse turbine according to claim 1, **characterized in that** the inlet portion (12a) of each working member (12) of the runner (10) opens towards a direction tangential to the runner (10).

3. Impulse turbine according to claim 2, **characterized in that** the discharge portion (12b) of each working member (12) of the runner (10) is wider than the relative inlet portion (12a).

4. Impulse turbine according to claim 3, **characterized in that** each working member (12) of the runner (10) is provided with an arched bottom surface (13) intended to allow said fluid to flow, for example having the shape of a portion of an arc of circle or of an ellipse, which extends by an angle a little smaller than 180°, as about 170°.

5. Impulse turbine according to any of claims 1 to 4, **characterized in that** each working member (12) of the runner (10) is such that the point at which the resultant (F) of the thrust forces applied to it as a result of the sliding of the fluid acts, is located between the inlet portion (12a) of the working member (12) and a plane of reference which passes along the axis of rotation of the runner (10) and is perpendicular to a segment joining the inlet portion (12a) and the discharge portion (12b) of the same working member (12), so that the runner (10) tends to rotate in such a way that the inlet portion (12a) of each working member (12) moves in agreement with the fluid fed to it.

6. Impulse turbine according to any of claims 1 to 4, **characterized in that** each working member (12) of the runner (10) is such that the point at which the resultant (F) of the thrust forces applied to it as a result of the sliding of the fluid acts, is located between the discharge portion (12b) of the working member (12) and a plane of reference which passes along the axis of rotation of the runner (10) and is perpendicular to a segment joining the inlet portion (12a) and the discharge portion (12b) of same working member (12), so that the runner (10) tends to rotate in such a way that the inlet portion (12a) of each working member (12) moves towards the fluid fed to it.

7. Impulse turbine according to claim 5 or 6, **characterized in that** each working member of the runner (10) is constituted by a blade (12) with an open concave section, provided with an arched bottom surface (13).

8. Impulse turbine according to claim 7, **characterized in that** the runner (10) comprises at least a pair of opposed blades (12), the bottom surface (13) of each blade (12) having a centre line which is located on a plane inclined of about 60° with respect to the axis of rotation of the runner (10).

9. Impulse turbine according to claim 7 or 8, **characterized in that** each blade (12) of the runner (10) is fed with said fluid by means of a distributor unit (20) adapted to cause the delivery of the fluid in a direction mainly tangential with respect to a circular outflow opening (32) thereof, the runner (10) being arranged coaxially with said outflow opening (32) in such a way that the inlet portion (12a) of its blades (12) are arranged within said outflow opening (32).

10. Impulse turbine according to claim 9, **characterized in that** the distributor unit (20) comprises a chamber (28) for the circulation of the fluid, delimited by a wall arranged according to a generally spiral configuration, to which the fluid is fed through a tangential feeding duct (24).

11. Impulse turbine according to claim 10, **characterized in that** the distributor unit (20) comprises means (38) for adjusting the flow rate of the fluid fed to said circulation chamber (28), which include a member (38) movable with respect to the circulation chamber (28) and adapted to take a plurality of positions in which such a member (38) interferes in a different measure with the flow of the fluid coming from the tangential feeding duct (24).

12. Impulse turbine according to claim 5 or 6, **characterized in that** each working member of the runner (10) is defined by a tubular duct (12) formed within the thickness of a bell-shaped body (10a, 10b), each tubular duct (12) being substantially helically wound with respect to the axis of rotation of the runner (10).

13. Impulse turbine according to claim 12, **characterized in that** each tubular duct (12) of the runner (10) is fed from a delivery pipe (26) coaxial with the axis of rotation of the runner (10).

14. Impulse turbine according to claim 13, **characterized in that** the runner (10) is associated with a shaft (14) arranged coaxially inside said delivery pipe (26) and **in that** such a shaft (14) extends outside the delivery pipe (26) at an elbow portion (26a) thereof.

15. Impulse turbine according to claim 13 or 14, **characterized in that** the body of the runner (10) includes first and second half-shells (10a, 10b) coupled to each other, a series of open channels being formed in the first half-shell (10a) and the second half-shell (10b) constituting a cover adapted to close said channels in its condition coupled with the first half-shell (10a), so as to delimit a series of tubular ducts (12).
